# Europäisches Patentamt
## European Patent Office
## Office européen des brevets

(19)

(11) Veröffentlichungsnummer: **0 010 647**
**B1**

(12)

# EUROPÄISCHE PATENTSCHRIFT

(45) Veröffentlichungstag der Patentschrift:
04.11.81

(51) Int. Cl.³: **C 21 B 13/00**

(21) Anmeldenummer: **79103849.0**

(22) Anmeldetag: **08.10.79**

(54) Verfahren und Vorrichtung zur Herstellung von Stahl aus Eisenerzstaub durch direkte Reduktion.

(30) Priorität: **10.10.78 DE 2844056**

(43) Veröffentlichungstag der Anmeldung:
**14.05.80 Patentblatt 80/10**

(45) Bekanntmachung des Hinweises auf die Patenterteilung:
**04.11.81 Patentblatt 81/44**

(84) Benannte Vertragsstaaten:
**BE FR GB IT SE**

(56) Entgegenhaltungen:
**DE-A1-2 424 932**
**DE-B-2 116 445**
**DE-B2-2 401 909**
**DE-C-442 776**
**DE-C-1 048 030**
**US-A-2 951 756**
**US-A-3 140 168**
**US-A-3 963 483**

(73) Patentinhaber: **Mannesmann Demag AG,
Wolfgang-Reuter-Platz, D-4100 Duisburg (DE)**

(72) Erfinder: **Driemeyer, Manfred, Dr.-Ing., Tonghsweg 14,
D-4174 Issum 2 (DE)**

(74) Vertreter: **Beil, Otto G. Dipl.-Ing., Mannesmann AG
Mannesmannufer 2, D-4000 Düsseldorf (DE)**

## Verfahren und Vorrichtung zur Herstellung von Stahl aus Eisenerzstaub durch direkte Reduktion

Die Erfindung betrifft ein Verfahren und eine Vorrichtung zur Herstellung von Stahl aus Eisenerzstaub durch direkte Reduktion, wobei der Eisenerzstaub vorgewärmt, anschließend mit einem Kohlenmonoxid enthaltenden Gasgemisch reduziert und das Reduktionsprodukt mit einem gasförmigen Fördermittel in eine Eisenschmelze unterhalb ihrer Badoberfläche eingebracht wird.

Aus der DE-B-2 401 909 ist ein Verfahren zur Herstellung von Stahl aus feinkörnigen Eisenerzen bekannt. Hierbei wird das vorgewärmte und teilreduzierte Eisenerz im Gegenstrom mit fast ausschließlich aus Kohlenmonoxid bestehenden Gasen in einem Wirbelschichtreaktor bei 500 bis 850° C zu Eisenschwamm reduziert. Der Eisenschwamm wird aus dem Wirbelschichtreaktor pneumatisch in ein Schmelzaggregat gefördert, derart, daß er durch unterhalb der Badoberfläche angeordnete Mehrmanteldüsen in die Eisenschmelze eingebracht wird.

Zur Durchführung dieses Verfahrens sind drei Reaktoren erforderlich: für die Vorreduktion, für die Reduktion (im Wirbelschichtverfahren) sowie für das Schmelzen. Bei dem Verfahren stehen Probleme an, insbesondere das Problem des Transportes des zur Reoxidation neigenden vorreduzierten Materials sowie der Gefahr des Zusammensinkens während der Direktreduktion.

Der vorliegenden Erfindung liegt somit die Aufgabe zugrunde, die Anzahl der Verfahrensschritte bei dem Verfahren zur direkten Herstellung von Stahl aus Eisenerzstaub durch direkte Reduktion zu verringern. Ferner sollen die bis jetzt auftretenden Störungen, hervorgerufen insbesondere durch die Reoxidation des vorreduzierten Materials bzw. durch Zusammensinken des Materials während der Direktreduktion, vermieden werden. Eine weitere Aufgabe der Erfindung liegt darin, die Anzahl der Anlagenteile zu verringern und die Transportwege zwischen den einzelnen Anlagenteilen zu vereinfachen. Diese Aufgabe wird erfindungsgemäß durch die Merkmale des Kennzeichenteiles des Patentanspruchs 1 gelöst. Vorteilhafte Weiterbildungen der Erfindung sind in den Unteransprüchen enthalten.

Bei dem erfindungsgemäßen Verfahren wird ein ca. 300° C heißes, $H_2$-reiches Gasgemisch rekuperativ von den Abgasen eines Eisenschmelzaggregats auf ca. 700° C erhitzt und einem Reduktionsschacht zugeführt. Unmittelbar vor Eintritt des Gasgemisches in den oberen Teil dieses Reduktionsschachtes, der im Ofenraum eines Eisenschmelzaggregates senkrecht angeordnet ist, wird dem Gasstrom feinstgemahlenes Eisenerz zugegeben. Im Reaktionsschacht, der mit seinem unteren Ende in ein schmelzflüssiges Fe-Metallbad eintaucht, wird das Feststoff-Gas-Gemisch auf etwa 1200° C erhitzt, wobei das Eisenerz praktisch spontan vom Reduktionsgas zum metallischen Eisen reduziert wird. Anschließend wird das Eisen, dem Gasstrom bzw. dem freien Fall folgend, zusammen mit dem Gasgemisch in die schmelzflüssige Phase gedrückt, wo es in den schmelzflüssigen Zustand übergeht.

Dem Metallbad wird Energie zugeführt, um eine Abkühlung des geschmolzenen Eisens durch das in die schmelzflüssige Phase eintretende Feststoff-Gas-Gemisch, dessen Temperatur unter der Liquidustemperatur des Eisens liegt, zu vermeiden, ferner um den Temperaturverlust evtl. ablaufender Nachreaktionen der über Wasserstoff ablaufenden endothermen Reduktionsprozesse auszugleichen und schließlich um die Abstrahlungsverluste des Schmelzbades zu kompensieren.

Das aus dem Metallbad austretende Abgas, bestehend aus den Komponenten $H_2$, CO, $H_2O$, $CO_2$ wird unmittelbar nach dem Austritt aus dem Schmelzaggregat dem Reduktionsgas zum rekuperativen Wärmeaustausch entgegengeführt. Anschließend wird das Abgas getrocknet und in der Regel dem Prozeß unmittelbar wieder zugeführt. Um den Verlust der durch den Reduktionsprozeß oxidierten Gasanteile auszugleichen, muß dem Prozeß ständig Frischgas zugeführt werden, das z. B. in einem Gasumformer aus Erdgas und Wasserdampf hergestellt werden kann Das Mischgas wird mit dem wieder aufbereiteten Gas aus dem Prozeß gemischt, rekuperativ erhitzt, mit Eisenerzstaub vermischt und in den Reduktionsschacht geleitet.

Bei dem Verfahren müssen naturgemäß die üblichen Sicherheitsmaßnahmen zur Vorbeugung von Explosionen getroffen werden, die bei Prozessen, bei denen ein $H_2$-haltiges Reduktionsgas verwendet wird, erforderlich sind. Vor allen Dingen muß die Gasdichtheit aller Anlagenteile gewährleistet sein.

Das erfindungsgemäße Verfahren ist dadurch ausgezeichnet, daß in einem Verfahrensschritt aus Erz Stahl erzeugt wird, wobei das bei hohen Reduktionstemperaturen günstige Reduktionspotential des Wasserstoffs genutzt wird.

In dem Schmelzaggregat wird praktisch keine metallurgische Arbeit geleistet. Es findet hier lediglich eine Trennung des metallischen Eisens von der oxidischen Gangart statt. Das Schmelzaggregat ist mit zwei Abstichlöchern versehen, die in üblicher Weise in unterschiedlicher Höhe angebracht sind, um Metall und Schlacke getrennt abstechen zu können.

Durch das erfindungsgemäße Verfahren wurde es möglich, die Anzahl der Verfahrensschritte zu verringern. Ebenso konnten die Transportwege zwischen den einzelnen Anlageteilen verkürzt werden.

## Beispiel

Um eine Tonne Eisen aus z. B. hämatitischem Eisenerz zu erzeugen, sind 1,430 t $Fe_2O_3$ und 602 $Nm^3$ $H_2$ erforderlich. Bezogen auf die Reduktionstemperatur von 1200°C werden somit zur Herstellung von einer Tonne Fe 3250 $m^3$ $H_2$ benötigt. Zur Herstellung von z. B. 30 t Fe sind, bezogen auf eine Reduktionstemperatur von 1200°C, 97 500 $m^3$ $H_2$ für die Reduktion von $Fe_2O_3$ zu metallischem Eisen erforderlich.

Der theoretische thermodynamische Wirkungsgrad der Reduktion von Eisenerzen zu metallischem Eisen mittels $H_2$ bei 1200°C beträgt

$$\eta_{theor., H_2, 1200°C} = 0,43,$$

d. h. es können lediglich 43% des vorliegenden Wasserstoffes im günstigsten Fall zur Reduktion zum metallischen Eisen genutzt werden.

Bei einem Wirkungsgrad von

$$\eta_{theor., H_2, 1200°C} = 0,30$$

waren 325 000 $m^3$ $H_2$ nötig, um 30 t Fe aus $Fe_2O_3$ bei 1200°C herzustellen. Dies entspricht einer auf den Normzustand bezogenen Gasmenge von 60 235 $Nm^3 H_2$.

Bei einem Gasausnutzungsgrad von

$$\eta_{theor., H_2, 1200°C} = 0,30$$

wurden 70%, d. h. 42 000 $Nm^3$ $H_2$ im Kreislauf verarbeitet. Es mußten demnach ca. 18 000 $Nm^3$ $H_2$/30 t Fe dem Prozeß frisch zugeführt werden, woraus sich zusammen mit der Leistung des Schmelzaggregates die Auslegungsdaten für den Gasumformer ergaben.

Im Gasumformer wurden Erdgas und Wasserdampf in die reduktionsfähigen Komponenten $H_2$ und CO überführt, gemäß der Umsetzungsreaktion

$$CH_4 + H_2O = 3 H_2 + CO.$$

Das frisch erzeugte Reduktionsgas bestand demnach aus drei Volumenteilen $H_2$ und einem Volumenanteil CO. Da der Frischgasanteil ca. 30% vom Gesamtgas beträgt, errechnet sich der CO-Anteil des Gesamtgases zu 7,5%.

Der thermodynamische Wirkungsgrad der Reduktion von Eisenoxiden über die CO-Phase ist bei einer Temperatur von 1200°C wesentlich kleiner als über die $H_2$-Phase

$$(\eta_{theor., CO, 1200°C} = 0,22).$$

Wegen des geringen Anteils des CO-Gases im Gesamtreduktionsgas (ca. 7,5%) wurde allerdings die hohe Effizienz des Reduktionsgases bei einer Reduktionstemperatur von 1200°C praktisch kaum beeinflußt.

Durch die wiederholte Verwendung von 70% des Gesamtgases hat sich das Gas allmählich mit CO und $CO_2$ angereichert. Es war deshalb erforderlich, nach nochmaligem Gasumlauf das wieder aufbereitete Abgas einer CO- und $CO_2$-Wäsche zu unterziehen, um das lose Reduktionspotential des Gases zu erhalten.

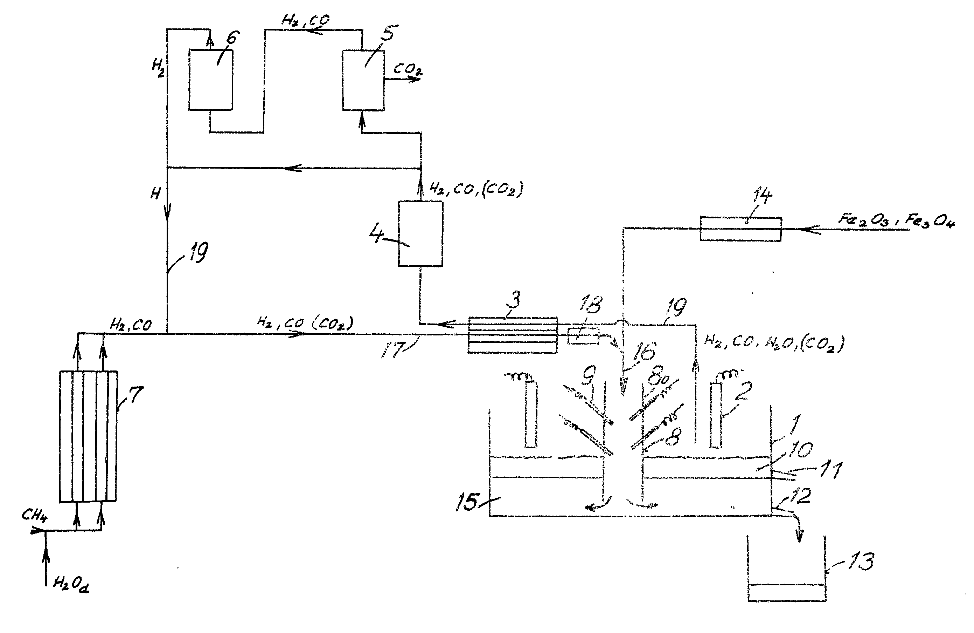

Das erfindungsgemäße Verfahren wird anhand der Zeichnung, die schematisch eine beispielsweise Vorrichtung zur Durchführung des Verfahrens darstellt, näher beschrieben.

Die Direktreduktion des Erzstaubes erfolgt in einem Feststoff-Gas-Durchlauf-Reaktor, der durch einen rohrförmigen, in ein Schmelzaggregat (Lichtbogenofen 1) hineinragenden und bis nahe an den Boden des Lichtbogenofens reichenden Reduktionsschacht 8 gebildet wird. Das untere Ende des Schachtes 8 taucht in das schmelzflüssige Eisenbad 15 ein. Der mit einer feuerfesten Auskleidung versehene Schacht 8 wird mittels an der Schachtwand angeordneter, in den Schacht 8 hineinragender Elektroden 9 auf etwa 1000 bis 1400°C erhitzt. In dem oberen Bereich 8a des Schachtes 8 mündet eine im letzten Abschnitt senkrecht verlaufende Leitung 16, durch die der Eisenerzstaub gefördert wird. In den senkrecht verlaufenden Abschnitt der Leitung 16 oberhalb des Reduktionsschachtes 8 mündet unter Bildung eines spitzen Winkels ein Leitungsrohr 17 für das Reduktionsgas ein. Kurz vor der Einmündungsstelle ist in der Leitung 17 ein Gasverdichter 18 vorgesehen, der das Reduktionsgas durch den letzten Abschnitt der Leitung 17 bzw. 16 fördert. Der durch den senkrechten Abschnitt der Leitung 16 frei fallende Erzstaub wird dem Gasstrom zugegeben, so daß die feste sowie die gasförmige Phase in den Reduktionsschacht 8 im Gleichstrom gelangen. Hier wird das Eisenerz praktisch spontan vom Reduktionsgas bei einer Temperatur von etwa 1200°C zu metallischem Eisen reduziert. Anschließend wird das Eisen dem Gasstrom bzw. dem freien Fall folgend zusammen mit dem Gasgemisch in die am Boden des Gefäßes vorhandene schmelzflüssige Phase 15 gedrückt, wo es in den schmelzflüssigen Zustand übergeht. Dem Metallbad 15 wird über Elektroden 2 Energie zugeführt, um vor allem eine Abkühlung des geschmolzenen Eisens durch das in die schmelzflüssige Phase eintretende Feststoff-Gas-Gemisch, dessen Temperatur unter der Liquidustemperatur des Eisens liegt, zu vermeiden. Weiterhin soll durch die Energiezufuhr der Temperaturverlust der evtl. verlaufenden Nachreaktionen der über $H_2$ ablaufenden endothermen Reduktionsprozesse ausgeglichen werden. Schließlich sollen durch die Energiezufuhr die Abstrahlverluste des Schmelzbades kompensiert werden.

Im Lichtbogenofen 1 ist oberhalb des Schmelzbades 15 eine Schlackenschicht 10 vorhanden. Im Bereich der Schlackenschicht 10 ist ein Schlackenabstich 11, im Bereich des Schmelzbades 15 ein Metallabstich 12 vorgesehen. Das metallische Eisen wird in eine Pfanne 13 abgestochen, in die nach Bedarf Kohlenstoffträger bzw. Legierungselemente eingegeben werden können.

Das Eisenerz ($Fe_2O_3$, $Fe_3O_4$) wird in der Erzmühle 14 feinstgemahlen und — wie bereits beschrieben — durch die Leitung 16 in den Reduktionsschacht gefördert.

Für die Anlage ist der folgende Gaskreislauf vorgesehen:

Das aus dem Lichtbogenofen 1 austretende Abgas, bestehend aus den Komponenten $H_2$, CO, $H_2O$ und $CO_2$, welches durch die Leitung 19 geführt wird, wird unmittelbar nach dem Austritt aus dem Ofen 1 dem Reduktionsgas zum rekuperativen Wärmeaustausch im Rekuperator 3 entgegengeführt. Anschließend wird das Abgas im Trockner 4 getrocknet und in der Regel dem Prozeß unmittelbar wieder zugeführt. Um den Verlust der durch den Reduktionsprozeß oxidierten Gasanteile auszugleichen, muß dem Prozeß ständig Frischgas zugeführt werden, das in einem Gasumformer 7 aus Erdgas und Wasserdampf hergestellt wird. Das Frischgas wird mit dem wieder aufbereiteten Gas aus dem Prozeß gemischt, im Rekuperator 3 erhitzt, mit Eisenerzstaub vermischt und in den Reduktionsschacht 8 geleitet.

Das allmählich mit CO und $CO_2$ angereicherte Gas wird einer Wäsche in einem $CO_2$-Wäscher 5 sowie einem CO-Wäscher 6 unterzogen, um das lose Reduktionspotential des Gases zu erhalten.

**Patentansprüche**

1. Verfahren zur Herstellung von Stahl aus Eisenerzstaub durch direkte Reduktion, wobei der Eisenerzstaub vorgewärmt, anschließend mit einem Kohlenmonoxid enthaltenden Gasgemisch reduziert und das Reduktionsprodukt mit einem gasförmigen Fördermittel in eine Eisenschmelze, unterhalb ihrer Badoberfläche, eingebracht wird, dadurch gekennzeichnet, daß der Eisenstaub in ein auf 400 bis 800° vorgewärmtes, überwiegend $H_2$ enthaltendes, zugleich als Fördermittel dienendes Reduktionsgas im Gleichstrom eingeführt und unmittelbar nach der Einführung durch einen bis nahe an den Boden eines Schmelzaggregates reichenden Reduktionsschacht, dessen Inneres auf 1000 bis 1400° erhitzt ist, gefördert wird, wonach das aus dem Eisenerzstaub spontan reduzierte metallische Eisen, dem Fördergasstrom und dem freien Fall folgend, in der im Schmelzgefäß vorhandenen Eisenschmelze in schmelzflüssigen Zustand überführt wird.

2. Verfahren nach Anspruch 1, dadurch gekennzeichnet, daß das Reduktionsgas von den Abgasen des Schmelzprozesses rekuperativ vorgewärmt wird.

3. Verfahren nach den Ansprüchen 1 und 2, dadurch gekennzeichnet, daß dem Reaktionsschacht ständig frisches Reduktionsgas zugeführt wird, das vorzugsweise aus Erdgas und Wasserdampf erzeugt wird.

4. Verfahren nach den Ansprüchen 1 bis 3, dadurch gekennzeichnet, daß die Abgase des Schmelzprozesses nach dem Rekuperator getrocknet, in $CO_2$- und CO-Wäschern gewaschen und in das frische Reduktionsgas eingeleitet werden.

5. Verfahren nach den Ansprüchen 1 bis 4, dadurch gekennzeichnet, daß das Reduktionsgas 5 bis 10 Vol.-% Monoxid enthält.

6. Vorrichtung zur Durchführung des Verfahrens nach den Ansprüchen 1 bis 5, mit einem Reaktor für die Direktreduktion des Eisenerzes sowie einem Schmelzaggregat mit einem Schlacken- und einem Metallabstich, wobei der Reaktor aus einem rohrförmigen, im wesentlichen senkrecht angeordneten, in das Schmelzaggregat von oben her hineinragenden und bis nahe an den Boden des Schmelzaggregates reichenden, auf 1000 bis 1400° beheizbaren Reduktionsschacht besteht, dadurch gekennzeichnet, daß im oberen Bereich (8a) des Reduktionsschachtes (8) eine Zuleitung (16) für das Reduktionsgas sowie den Eisenerzstaub vorgesehen ist, in welche ein mit dem Gasumformer (7) verbundenes Gaszuleitungsrohr (17) einmündet.

7. Vorrichtung nach Anspruch 6, dadurch gekennzeichnet, daß der Reduktionsschacht (8) elektrisch beheizbar ist.

8. Vorrichtung nach Anspruch 7, dadurch gekennzeichnet, daß zur Beheizung in den Schachtwänden angeordnete, in den Schacht hineinragende Elektroden (9) vorgesehen sind.

9. Vorrichtung nach Anspruch 6 bis 8, dadurch gekennzeichnet, daß der Reduktionsschacht (8) mit einer feuerfesten Auskleidung versehen ist.

10. Vorrichtung nach den Ansprüchen 6 bis 9, dadurch gekennzeichnet, daß das Leitungsrohr (17) für das Reduktionsgas in das Leitungsrohr (16) für den Eisenerzstaub vor dem Eintritt in den Reduktionsschacht in einen spitzen Winkel einmündet.

**Claims**

1. Process for the production of steel from iron ore dust by direct reduction whereby the iron ore dust is preheated, then reduced with a carbon-monoxide-containing gas mixture and the reduction product is fed with a gaseous conveying medium into an iron melt below the bath surface wherein the iron dust is introduced in uniflow into a reducing gas, said reducing gas being preheated to 400 to 800°, containing predominantly $H_2$ and serving at the same time as the conveying medium, whereby, directly after introduction, the iron dust is conveyed through a reducing shaft reaching near to the base of a melting unit, the inside of said reducing shaft being heated to 1000 to 1400°, whereafter the metallic iron reduced spontaneously from the iron ore dust, following the conveying gas flow and the free fall, is converted into a molten state in the iron melt in the melting vessel.

2. Process according to claim 1, wherein the reducing gas is recuperatively preheated by the waste gases of the melting process.

3. Process according to claims 1 and 2, wherein fresh reducing gas is constantly fed into the reducing shaft, said reducing gas being produced preferably from natural gas and water vapour.

4. Process according to claims 1 to 3, wherein the waste gases of the melting process are dried downstream of the recuperator, are washed in $CO_2$ and CO washers and are introduced into the fresh reducing gas.

5. Process according to claims 1 to 4, wherein the reducing gas contains 5 to 10% by volume of monoxide.

6. Device for implementing the process according to claims 1 to 5, with a reactor for the direct reduction of the iron ore as well as a melting unit with slag and metal removal means, whereby the reactor consists of a tubular reducing shaft disposed more or less vertically, projecting into the melting unit from above, reaching near to the base of the melting unit and being heatable to 1000 to 1400°, wherein provided in the upper region (8a) of the reducing shaft (8) is a feed line (16) for the reducing gas and the iron ore dust whereby joining into said feed line is a gas feed pipe (17) connected to the gas converter (7).

7. Device according to claim 6, wherein the reducing shaft (8) can be heated electrically.

8. Device according to claim 7, wherein electrodes (9) are disposed in the shaft walls for heating and project into the shaft.

9. Device according to claims 6 to 8, wherein the reducing shaft (8) is provided with a fireproof lining.

10. Device according to claims 6 to 9 wherein the gas feed pipe (17) joins the iron ore dust feed line (16) at an acute angle before entering the reducing shaft.

**Revendications**

1. Procédé de fabrication d'acier à partir de poussière de minerai de fer par réduction directe, la poussière de minerai de fer étant préchauffée, puis réduite par un mélange gazeux contenant du monoxyde de carbone, le produit de la réduction étant introduit avec un agent d'acheminement gazeux dans le fer en fusion en dessous de sa surface de bain, caractérisé par le fait que la poussière de fer est introduite en flux continu dans un gaz réducteur préchauffé entre 400 et 800°, contenant principalement de l'$H_2$ et servant simultanément d'agent d'acheminement, et est immédiatement après dirigée à travers un puit de réduction arrivant à proximité du fond d'un agrégat de fusion et dont l'intérieur est chauffé jusqu'à une température de 1000 à 1400°, puis que le fer métallique réduit spontanément à partir de la poussière de minerai de fer, suivant le flux de gaz d'acheminement et la chute libre, est amené en fusion à l'état liquide dans le fer en fusion contenu dans le bac de fusion.

2. Procédé suivant spécification 1, caractérisé par le fait que le préchauffage du gaz réducteur est assuré par la récupération des effluents gazeux provenant de la fusion.

3. Procédé suivant les spécifications 1 et 2, caractérisé par le fait qu'un gaz réducteur frais, produit de préférence à partir de gaz naturels et de vapeurs d'eau, est envoyé continuellement dans le puit de réduction.

4. Procédé suivant les spécifications 1 à 3, caractérisé par le fait que les effluents gazeux provenant de la fusion sont séchés en aval du récupérateur, lavés dans des laveurs à $CO_2$ et CO, puis dirigés vers le gaz réducteur frais.

5. Procédé suivant les spécifications 1 à 4, caractérisé par le fait que le gaz réducteur contient 5 à 10% de monoxyde en volume.

6. Dispositif pour l'exécution du procédé suivant les spécifications 1 à 5, avec un réacteur pour la réduction directe du minerai de fer ainsi qu'un agrégat de fusion muni d'un trou de coulée du laitier et du métal, le réacteur étant composé d'un puit de réduction tubulaire, pouvant être chauffé à des températures comprises entre 1000 et 1400°, disposé pour l'essentiel verticalement, faisant saillie par le haut dans l'agrégat de fusion et arrivant à proximité du fond de l'agrégat de fusion, caractérisé par le fait qu'une conduite (16), dans laquelle aboutit un tube adducteur (17) relié au transformateur de gaz (7), est prévue à la partie supérieure (8a) du puit de réduction (8) pour le gaz réducteur et la poussière de minerai de fer.

7. Dispositif suivant spécification 6, caractérisé par le fait que le puit de réduction (8) peut être chauffé électriquement.

8. Dispositif suivant spécification 7, caractérisé par le fait que des électrodes (9) disposés sur les parois du puit et faisant saillie à l'intérieur du puit, sont prévus pour le chauffage.

9. Dispositif suivant les spécifications 6 à 8, caractérisé par le fait que le puit de réduction (8) est pourvu d'un revêtement intérieur réfractaire.

10. Dispositif suivant spécifications 6 à 9, caractérisé par le fait que la conduite (17) transportant le gaz réducteur se branche suivant un angle aigu dans la conduite (16) transportant la poussière de minerai de fer avant entrée dans la puits de réduction.